# FASCICULE DE BREVET EUROPEEN

(11) **EP 3 708 474 B1**
(45) Date de publication et mention de la délivrance du brevet: **02.03.2022**
(21) Numéro de dépôt: 20315037.0
(22) Date de dépôt: 10.03.2020
(51) Int. Cl.: B62J 11/04

(54) **DISPOSITIF POUR TRANSPORTER DES BOUTEILLES OU BIDONS SUR UN VÉLOCIPÈDE**
VORRICHTUNG ZUM TRANSPORTIEREN VON FLASCHEN ODER KANISTERN AUF EINEM FAHRRAD
DEVICE FOR TRANSPORTING BOTTLES OR CANS ON A VELOCIPEDE

(30) Priorité: 13.03.2019 FR 1902547
(43) Date de publication de la demande: 16.09.2020
(73) Titulaire: Gilardi, Philippe, 31290 Mauremont (FR)
(72) Inventeur: Gilardi, Philippe, 31290 Mauremont (FR)

(56) Documents cités:
- WO-A1-01/17845
- WO-A1-98/41439
- FR-A- 989 085
- TW-A- 201 247 464
- US-A1- 2011 042 435
- Anonymous: "Porte bidon inox - Maxi Water", , 10 février 2020 (2020-02-10), XP055666620, Extrait de l'Internet: URL:http://www.maxiwater.net/porte-bidon-i nox-c2x28684452 [extrait le 2020-02-10]

## Description

La présente invention concerne un dispositif permettant de porter à vélocipède des bouteilles ou bidons cylindriques ou légèrement coniques de différents diamètres et longueurs, souples et rigides, sans détériorer le matériau constituant leur contenant et en effectuer leur transport en toute sécurité sur une surface de roulage accidentée.

Traditionnellement le transport des bouteilles ou bidons à vélocipède s'effectue selon le dispositif décrit dans le brevet US n°D264954 (S). La technique enseigne une cage amovible fixée sur le vélocipède, dont la géométrie et les cotes ne sont pas ajustables par rapport à l'objet contenu et n'offre donc pas la possibilité d'y loger différents types de bouteilles ou bidons dont le diamètre serait du simple au double et de longueur variable. Un deuxième brevet TW n°201247464 A1 selon la figure dessin n°1 enseigne un support amovible dont la forme géométrique semble être en forme de U et comportant quatre ailettes déformables sous forme de demi-virole, et divulgue le préambule de la revendication 1. Ces deux techniques permettent de loger un objet légèrement plus grand que les cotes de la cage qu'elles constituent, afin d'en effectuer son calage en jouant sur la déformation élastique de cette dernière et/ou non la déformation élastique de l'objet. Ce dispositif induit des frictions répétées pouvant altérer le matériau du contenant et une augmentation de la déformation élastique de la cage dans le temps. L'affaiblissement mécanique des matériaux diminue les pressions et points de calages de l'objet. Ainsi lorsque le vélocipède évolue sur une surface de roulage accidentée générant des vibrations qui se transmettent à la cage, il est possible de voir par translation se déloger la bouteille ou le bidon de son support.

Le dispositif selon l'invention permet de remédier à ces inconvénients. Il comporte en effet selon une première caractéristique , un support amovible dont la forme géométrique représente un profilé en « U », dont quatre de ses extrémités comportent des ailettes sur les parties verticales que représente le « U », dont leur angle d'ouverture forme géométriquement dans un sens longitudinal en perspective un « V » muni de silent blocs, permettant un calage par étranglement progressif d'un objet cylindrique ou légèrement conique, sous son propre poids et selon ses mesures, lorsque il est positionné à l'intérieur du « V » que forme les ailettes et par contact avec ces dernières.

Selon ces modes particuliers de réalisation :
- Les ailettes munies de silent blocs dont leur angle d'ouverture reste constant peuvent constituer des surfaces de congruence à la bouteille ou bidon.
- Une sangle de serrage à réglage micrométrique ceinture la bouteille ou bidon au profilé en «U » peut maintenir une pression de contact avec les silent blocs.
- Une des extrémités du profilé en « U » dans le prolongement de sa base comporte un retour plié vertical et peut constituer une butée de calage au culot de la bouteille ou bidon.
- La valeur minimale de calage d'un objet cylindrique par étranglement est équivalente à la largeur extérieure du profilé en « U » dont la mesure correspond au diamètre de la bouteille ou bidon et que la valeur maximale de calage d'un objet cylindrique par étranglement est équivalente à la distance qui sépare le somment des ailettes en vis-à-vis dans un axe sagittal dont la mesure correspond au diamètre de la bouteille ou bidon. Les deux valeurs tendant à être du simple au double.
- Différends orifices pratiqués dans la base du profilé en «U » peuvent permettre de positionner de la visserie destinée à un ancrage du support sur le vélocipède.

Les dessins annexés illustrent l'invention :

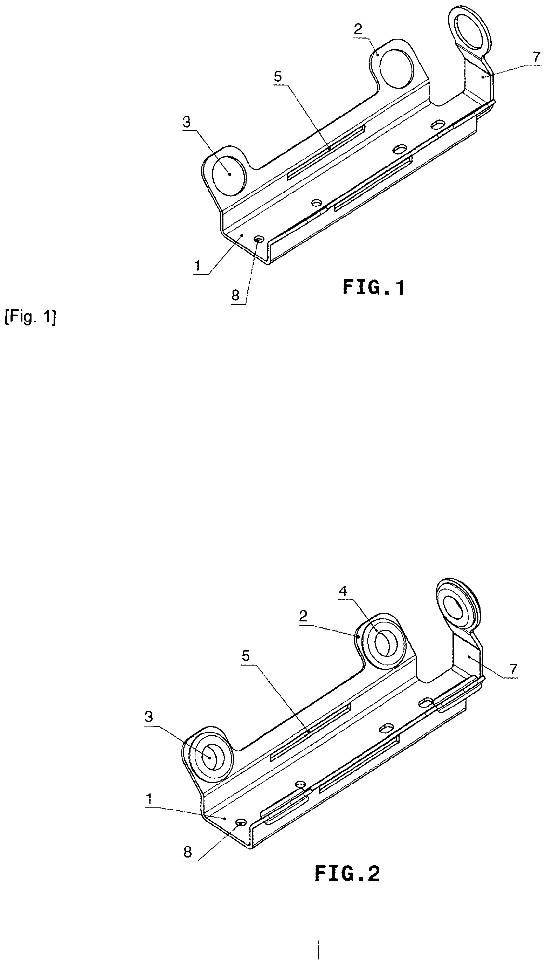

[Fig.1] représente en trois dimensions, le dispositif de l'invention.
[Fig.2] représente en trois dimensions, le dispositif équipé de ses silent blocs.

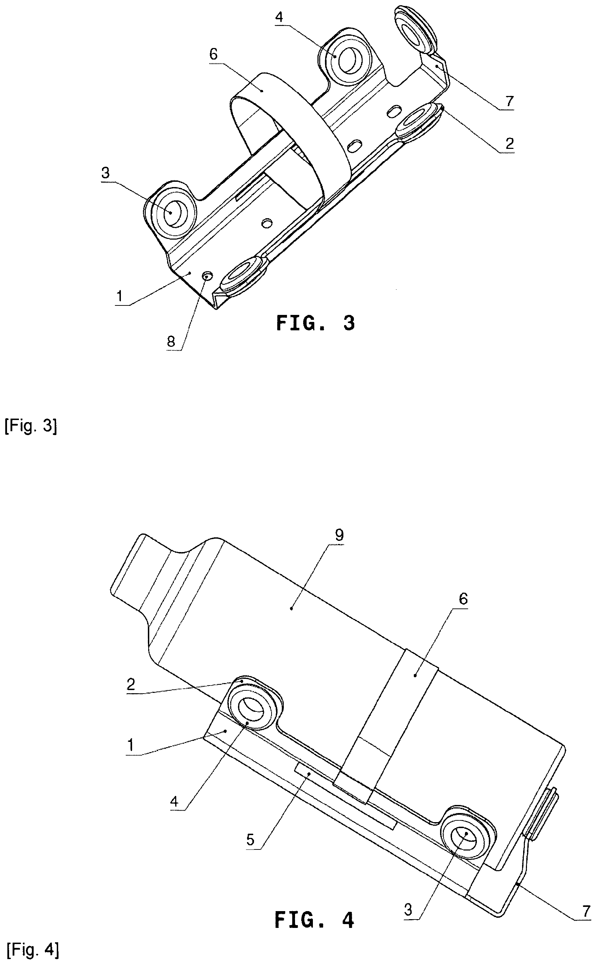

[Fig.3] représente en trois dimensions, le dispositif équipé de sa sangle de serrage à réglage micrométrique.
[Fig.4] représente en trois dimensions, le dispositif portant une bouteille, le support amovible positionné sur un plan oblique.

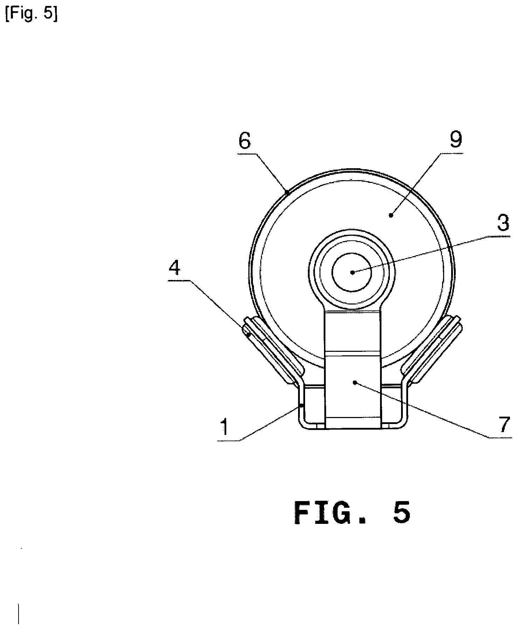

[Fig.5]représente en coupe, le dispositif de l'invention.

En référence à ces dessins le dispositif comporte un support amovible dont la forme géométrique représente un profilé en « U » (1). Quatre de ses extrémités comportent, sur les parties verticales que forme le « U » (1) des ailettes (2) de proportions égales, présentant chacune un orifice, opposées deux à deux dans un sens longitudinal et sagittal en vis-à-vis.

Les orifices (3) des ailettes (2) permettent de positionner des sillent blocs (4) souples en caoutchouc permettant d'offrir une surface de congruence avec les bouteilles (9) ou bidons, cylindriques ou légèrement coniques, dont leurs points de contacts avec les sillent blocs (4) se situent en périmétrie de leur axe de révolution dans un sens longitudinal et sagittal.

Les quatre ailettes (2) munies de sillent bloc (4) ont un angle d'ouverture approximativement de 41° dont la géométrie représente en perspective un « V » permettant un logement d'une forme cylindrique ou légèrement conique, souple ou dure, une bouteille (9) ou bidon. Le cylindre sous son propre poids vient se caler dans le « V » que forment les ailettes (2) par étranglement, d'une façon progressive pour une dimension de diamètre allant du simple ou double.

Le « V » que forment les ailettes (2) est tronqué à sa base par les retours verticaux du profilé en « U » (1).

Les retours verticaux du profilé en « U » (1) présentent chacun une lumière (5) dans le sens longitudinal opposée deux à deux. Ces lumières (5) permettent le passage d'une sangle (6) de serrage à réglage micrométrique ceinturant la bouteille (9) ou bidon de façon à augmenter la surface de congruence, cylindre et silent blocs (4) et maintenir une pression de calage des objets dans le « V » que forment les ailettes (2) afin d'éviter tout mouvement de translation de ces derniers ou délogement.

Une des extrémités du profilé en « U » (1) dans le prolongement de sa base comporte un retour plié (7) vertical dont la hauteur totale est supérieure au sommet des ailettes (2). Ce retour en sa partie supérieure comporte un orifice (3) afin de positionner un silent bloc (4). Lorsque le support amovible est positionné sur un plan oblique sur le vélocipède, le culot de la bouteille (9) ou bidon vient en butée sur la partie supérieure du retour plié (7) qui comporte le silent bloc (4) afin d'éviter tout mouvement de translation par gravité de ces derniers.

En sa base le profilé en «U » (1) présente différends orifices (3) afin de positionner de la visserie destinée à un ancrage du support sur le vélocipède.

Le dispositif selon l'invention est particulièrement destiné au transport de bouteilles ou bidons sur un vélocipède.

## Revendications

1. Dispositif pour transporter à vélocipède des bouteilles (9) ou bidons cylindriques ou légèrement coniques de différentes longueurs et de différents diamètres dont la mesure peut être du simple au double, comportant un support amovible dont la géométrie représente un profilé en forme de U (1), dont quatre de ses extrémités comportent des ailettes (2) sur les parties verticales de la forme en U (1), **caractérisé en ce que** leur angle d'ouverture constitue géométriquement dans un sens longitudinal en perspective une forme en V munie de silent blocs (4), permettant un calage par étranglement progressif d'un objet cylindrique ou légèrement conique, sous son propre poids et selon ses mesures, lorsqu'il est positionné à l'intérieur de la forme en V constituée par les ailettes (2) et par contact avec ces dernières.

2. Dispositif selon la revendication 1 **caractérisé en ce que** la forme en V constituée par les ailettes (2) est tronquée à sa base par les parties verticales du profilé en forme de U (1).

3. Dispositif selon la revendication 1 **caractérisé en ce que** les quatre ailettes (2) de proportions égales, opposées deux à deux dans un sens longitudinal et sagittal en vis-à-vis, dont leur angle d'ouverture est approximativement de 41 ° présentent chacune un orifice permettant de positionner un des silent blocs (4) en caoutchouc souple couvrant la quasi-totalité de la surface de l'ailette (2).

4. Dispositif selon la revendication 3 **caractérisé en ce que** les silent blocs (4) offrent des surfaces de congruence permettant de positionner un cylindre légèrement conique ou pas, notamment une bouteille (9) ou bidon, dont les points de contacts du cylindre souple ou dur et silent blocs (4) se situent en périmétrie de leur axe de révolution dans un sens longitudinal et sagittal.

5. Dispositif selon la revendication 1 **caractérisé en ce que** les parties verticales de la forme en U (1) présentent dans leur axe longitudinal chacun une lumière (5) opposée deux à deux symétriquement permettant le passage d'une sangle (6) à réglage micrométrique ceinturant la bouteille (9) ou bidon dont le serrage tend à augmenter la surface de congruence cylindre et silent blocs (4) et tend également à maintenir une pression de calage des objets à l'intérieur de la forme en V que constituent les ailettes (2) afin d'en éviter tout mouvement de translation ou délogement.

6. Dispositif selon la revendication 1 **caractérisé en ce que** une des extrémités de la forme en U (1) dans un prolongement de sa base comporte un retour plié (7) vertical dont la hauteur totale est supérieure au sommet des ailettes (2), en sa partie supérieure un orifice permet de positionner un silent bloc (4) supplémentaire .

7. Dispositif selon la revendication 6 **caractérisé en ce que** le retour plié (7) vertical constitue une butée de calage, un culot de la bouteille (9) ou bidon vient en contact avec le silent bloc supplémentaire (4) lorsque le support amovible est positionné sur un plan oblique sur le vélocipède et tend à éviter tout mouvement de translation par gravité des objets positionnés sur les ailettes (2).

8. Dispositif selon la revendication 1 ou la revendication 2 **caractérisé en ce que** la valeur minimale de calage d'un objet cylindrique par étranglement est équivalente à la largeur extérieure du profilé en forme de U (1) dont la mesure correspond au diamètre de la bouteille (9) ou bidon et que la valeur maximale de calage d'un objet cylindrique par étranglement est équivalente à la distance qui sépare le sommet des ailettes (2) en vis-à-vis dans un axe sagittal dont la mesure correspond au diamètre de la bouteille (9) ou bidon, les deux valeurs tendant à être du simple au double.

9. Dispositif selon la revendication 1 **caractérisé en ce que** le profilé en forme de U (1) en sa base dans son axe longitudinal et médian présente différents orifices (8) afin de positionner de la visserie destinée à un ancrage du support sur le vélocipède.

## Patentansprüche

1. Vorrichtung zum Transport auf Fahrrädern von zylindrischen oder leicht konischen Flaschen (9) oder kanistern unterschiedlicher Länge und unterschiedlichen Durchmessers, deren Maße sich verdoppeln können, umfassend einen abnehmbaren Träger, dessen Geometrie ein U-förmiges Profil (1) darstellt, wovon vier Enden Flügel (2) an den senkrechten Teilen der U-Form (1) umfassen, **dadurch gekennzeichnet, dass** deren Öffnungswinkel geometrisch in Längsrichtung und Perspektive eine V-Form darstellt, die mit Silentblöcken (4) ausgestattet ist und ein Festhalten durch fortschreitende Verengung eines zylindrischen oder leicht konischen Gegenstands unter dessen Eigengewicht und entsprechend dessen Maßen ermöglicht, wenn dieser in die von den Flügeln (2) gebildete V-Form gelegt wird und durch Kontakt mit den Flügeln (2).

2. Vorrichtung gemäß Patentanspruch 1, **dadurch gekennzeichnet, dass** die von den Flügeln (2) gebildete V-Form an der Basis durch die senkrechten Teile des U-förmigen Profils (1) abgeschnitten wird.

3. Vorrichtung gemäß Patentanspruch 1, **dadurch gekennzeichnet, dass** die vier gleich proportionierten Flügel (2), die sich paarweise longitudinal und sagittal gegenüber stehen und deren Öffnungswinkel ungefähr 41° beträgt, jeweils eine Öffnung aufweisen, in die ein Silentblock (4) aus Weichkautschuk eingesetzt werden kann, der fast die gesamte Fläche des Flügels (2) abdeckt.

4. Vorrichtung gemäß Patentanspruch 3, **dadurch gekennzeichnet, dass** die Silentblöcke (4) Kongruenzflächen bieten, mit denen ein leicht oder nicht konischer Zylinder, insbesondere eine Flasche (9) oder ein kanister, positioniert werden kann, wobei die Kontaktpunkte des weichen oder harten Zylinders und der Silentblöcke (4) sich longitudinal und sagittal am Umfang ihrer Rotationsachse befinden.

5. Vorrichtung gemäß Patentanspruch 1, **dadurch gekennzeichnet, dass** die senkrechten Teile der U-Form (1) in ihrer Längsachse jeweils ein symmetrisch gegenüberliegendes Langloch (5) aufweisen, das die Durchführung eines Gurtes (6) mit Mikrometereinstellung zum Umfassen der Flasche (9) oder des kanisters ermöglicht, wobei dessen Festziehen dazu tendiert, die Kongruenzfläche zwischen Zylinder und Silentblöcken (4) zu erhöhen sowie einen Haltedruck der Gegenstände innerhalb der von den Flügeln gebildeten (2) V-Form aufrecht zu erhalten, um jede Translation oder Loslösung zu vermeiden.

6. Vorrichtung gemäß Patentanspruch 1, **dadurch gekennzeichnet, dass** ein Ende der U-Form (1) in einer Verlängerung seiner Basis eine gefalzte senkrechte Rückführung (7) umfasst, deren Gesamthöhe höher als die Oberkante der Flügel (2) ist, und die in ihrem oberen Teil über eine Öffnung verfügt, in die ein weiterer Silentblock (4) eingesetzt werden kann.

7. Vorrichtung gemäß Patentanspruch 6, **dadurch gekennzeichnet, dass** die gefalzte senkrechte Rückführung (7) einen Anschlag bildet; der Boden der Flasche (9) oder des kanisters kommt mit dem zusätzlichen Silentblock (4) in Kontakt, wenn der abnehmbare Träger auf einer schrägen Ebene des Fahrrads positioniert wird, wodurch jede Translation durch Schwerkraft der auf den Flügeln (2) positionierten Gegenstände verhindert wird.

8. Vorrichtung gemäß Patentanspruch 1 oder Patentanspruch 2, **dadurch gekennzeichnet, dass** der Mindesthaltewert eines zylindrischen Gegenstands durch Verengung der äußeren Breite des U-förmigen Profils (1) entspricht, dessen Maß dem Flaschen- (9) oder kanisterdurchmesser entspricht, und dass der Höchsthaltewert eines zylindrischen Gegenstands durch Verengung dem Abstand zwischen den Oberkanten der sagittal gegenüber liegenden Flügel (2) entspricht, dessen Maß dem Flaschen- (9) oder kanisterdurchmesser entspricht, wobei diese beiden Werte dazu tendieren sich zu verdoppeln.

9. Vorrichtung gemäß Patentanspruch 1, **dadurch gekennzeichnet, dass** das U-förmige Profil (1) an seiner Basis in der Längs- und Mittelachse verschiedene Bohrungen (8) aufweist, um die Schrauben für eine Verankerung des Trägers auf dem Fahrrad aufzunehmen.

## Claims

1. Device for transporting on a velocipede cylindrical or slightly conical bottles (9) or cans of different lengths and of different diameters the measurement of which may be from single to double, comprising a removable support the geometry of which represents a U-shaped profile (1), four of its ends of which have fins (2) on the vertical parts of the U-shape (1), **characterized in that** their opening angle geometrically constitutes in a longitudinal direction in perspective a V-shape fitted with silent blocks (4), allowing a gradual wedging by throttling of a cylindrical or slightly conical object, under its own weight and according to its measurements, when it is positioned inside the V-shape formed by the fins (2) and by contact with them.

2. Device according to claim 1 **characterized in that** the V-shape formed by the fins (2) is truncated at its base by the vertical parts of the U-shaped profile (1).

3. Device according to claim 1 **characterized in that** the four fins (2) of equal proportions, opposite two by two in a longitudinal direction and sagittal facing each other, their opening angle of which is approximately 41° each have an orifice making it possible to position one of the silent blocks (4) in flexible rubber covering almost the entire surface of the fin (2).

4. Device according to claim 3 **characterized in that** the silent blocks (4) offer congruence surfaces making it possible to position a cylinder that is slightly conical or not, in particular a bottle (9) or can, the contact points of which of the cylinder flexible or hard and silent blocks (4) are located at the perimetry of their axis of revolution in a longitudinal and sagittal direction.

5. Device according to claim 1 **characterized in that** the vertical parts of the U-shape (1) each have in their longitudinal axis a slot (5) opposite two by two symmetrically allowing the passage of a strap (6) with micrometric adjustment surrounding the bottle (9) or can the tightening of which tends to increase the area surface of congruence cylinder and silent blocks (4) and also tends to maintain a clamping pressure of the objects inside the V-shape formed by the fins (2) in order to avoid any translational movement or dislodgement.

6. Device according to claim 1 **characterized in that** one end of the U-shape (1) in an extension of its base comprises a vertical folded return (7) whose total height is greater than the top of the fins (2 ), an orifice in its upper part makes it possible to position an additional silent block (4).

7. Device according to claim 6 **characterized in that** the vertical folded return (7) constitutes a wedging stop, a base of the bottle (9) or can comes into contact with the additional silent block (4) when the removable support is positioned on an oblique plane on the velocipede and tends to avoid any translational movement by gravity of the objects positioned on the fins (2).

8. Device according to claim 1 or claim 2 **characterized in that** the minimum value of wedging of a cylindrical object by throttling is equivalent to the outer width of the U-shaped profile (1) whose measurement corresponds to the diameter of the bottle (9) or can and that the maximum wedging value of a cylindrical object by throttling is equivalent to the distance between the top of the fins (2) facing each other in a sagittal axis whose measurement corresponds the diameter of the bottle (9) or can, the two values tending to vary in the ratio from one to two.

9. Device according to claim 1 **characterized in that** the U-shaped profile (1) at its base in its longitudinal and median axis has different orifices (8) in order to position the screws intended to an anchoring of the support on the velocipede.
